# EUROPÄISCHE PATENTSCHRIFT

(11) **EP 1 071 898 B1**
(45) Veröffentlichungstag und Bekanntmachung des Hinweises auf die Patenterteilung: **02.07.2003**
(21) Anmeldenummer: 99924773.7
(22) Anmeldetag: 06.04.1999
(51) Int. Cl.: F16K 17/10

(54) **FEDERBELASTETES TANDEM-STEUERVENTIL**
SPRING-LOADED TANDEM CONTROL VALVE
SOUPAPE DE COMMANDE EN TANDEM A RESSORT

(30) Priorität: 14.04.1998 DE 19816463
(43) Veröffentlichungstag der Anmeldung: 31.01.2001
(73) Patentinhaber: Framatome ANP GmbH, 91050 Erlangen (DE)
(72) Erfinder: CONRADS, Hermann-Josef, D-91074 Herzogenaurach (DE); LAURER, Erwin, D-91096 Möhrendorf (DE); MODEL, Jürgen, D-91056 Erlangen (DE)
(74) Vertreter: Tergau & Pohl Patentanwälte
(86) Internationale Anmeldenummer: DE9901024
(87) Internationale Veröffentlichungsnummer: WO99053229

(56) Entgegenhaltungen:
- DE-A- 3 906 888
- DE-A- 4 426 857
- DE-C- 455 133
- US-A- 2 619 109

## Beschreibung

Die Erfindung betrifft eine Anordnung bestehend aus einer Armatur und einer Steuereinrichtung mit den Merkmalen des Oberbegriffs des Anspruches 1 oder des Anspruches 2. Es handelt sich dabei um eigenmediumbetätigte Armaturen, vorzugsweise um Sicherheitsventile zur Reduzierung von unerwünschten Überdrücken in Druckleitungen oder Druckbehältern. Die eigenmediumbetätigten Armaturen werden dabei durch ein Steuerventil bei einem kritischen Druck in einem Druckbehälter oder einer Druckleitung geöffnet und sollen durch dasselbe Steuerventil bei Unterschreiten eines kritischen Druckwertes wieder geschlossen werden. Die Steuerventile sind dabei federbelastet. Bevorzugter Anwendungsbereich derartiger eigenmediumgesteuerter Armaturen ist der Primärkreis von Kernkraftwerken, insbesondere Druckwasserreaktoren.

Federbelastete Steuerventile als solche sind im Stand der Technik hinreichend bekannt und werden von verschiedenen Firmen bereits für diese Zwecke angeboten. Beispielsweise ist ein solches Sicherheitsventil aus der DE-PS 455 133 bekannt. Bei einer nach dem Entlastungsprinzip arbeitenden Steuerventilanordnung arbeitet der Systemdruck (Druck im Druckbehälter) gegen eine Feder und eine Magnetzusatzlast und öffnet ein Vorsteuerventil, dem ein Rückschlagventil nachgeordnet ist. Ein Ventilteller dieses Rückschlagventils wird dadurch gegen die Kraft einer weiteren Feder angehoben und hebt einen Rückschlag-Ventilkegel aus seinem Ventilsitz; dadurch wird die Steuerleitung eines Druckbehälter-Sicherheitsventils geöffnet und der Steuerraum des Sicherheitsventils entlastet. Das Sicherheitsventil öffnet. Es schließt wieder, wenn der Systemdruck soweit abgesunken ist, daß das Vorsteuerventil und das Rückschlagventil schließt.

Die Ventilanordnung eines zweiten Herstellers arbeitet nach dem Belastungsprinzip. Sie besteht im wesentlichen nur aus einem Ventil mit Feder- und Magnet-Belastung (ähnlich dem erwähnten Steuerventil) und leitet - sobald ein Grenzwert ("Setpoint") erreicht ist - einen Massenstrom aus dem Druckbehälter in die Steuerleitung, die zum Steuerraum des Sicherheitsventils führt und dieses aufdrückt.

Das Steuerventil eines dritten Herstellers betätigt mehrere miteinander verbundene Ventilkörper, mit denen der Steuerraum des Sicherheitsventils sowohl unter Druck gesetzt (Schließen des Sicherheitsventils) als auch druckentlastet (geöffnet) wird.

Federbelastete Steuerventile weisen eine relativ hohe und mit der Hauptarmatur nicht übereinstimmende Wahrscheinlichkeit für ein Schließversagen auf. Die Schließunfähigkeit eines federbelasteten Steuerventils liegt bei 10⁻²/Anforderung, d.h. daß bei 100 Anforderungen probabilistisch bereits ein Fall des Schließversagens auftritt. Demgegenüber liegt die Schließversagenswahrscheinlichkeit für die Hauptarmatur bei 10⁻⁴/pro Anforderung. Diese gute Schließversagenswahrscheinlichkeit der Hauptarmatur ist aber wegen der verhältnismäßig schlechten Schließversagenswahrscheinlichkeit des Steuerventils wirkungslos.

Auch bei einer neueren Entwicklung eines Steuerventils nach der deutschen Anmeldung DE-C- 196 28 610.7 ist die Schließversagenswahrscheinlichkeit noch nicht voll befriedigend. Dabei ist ein Druck-Weg-Umformer verbunden mit einem Steuerventil wobei der Druckwegumformer mit einem Auffüllkegel und mit einem Entlastungskegel mechanisch in Verbindung steht und beide Kegel in gleicher Richtung bewegt werden. Der Auffüllkegel kann in einem ersten Schritt durch eine relativ kleine Kraft gegen einen Sitz verschoben werden, wodurch eine Steuerleitung des Steuerventils abgesperrt wird. Nur durch eine relativ große Kraft kann in einem zweiten Schritt der Entlastungskegel von seinem Sitz abgehoben werden, wodurch die Steuerleitung des Steuerteils mit einer zur Umgebung offenen Leitung verbunden und das Sicherheitsventil entlastet (geöffnet) wird.

Theoretische Überlagerungen ergaben, daß sich die Schließversagenswahrscheinlichkeit von Steuerventilen dadurch verringern läßt, daß eine Kombination von solchen Steuerventilen in Reihe geschaltet wird. Z.B. würde die Reihenschaltung von zwei Steuerventilen dann eine Schließversagenswahrscheinlichkeit von (10⁻²)²/Anforderung ergeben, d.h. von 10⁻⁴ pro Anforderung. Eine derartige Schließversagenswahrscheinlichkeit steht in guter Übereinstimmung mit der Schließversagenswahrscheinlichkeit der Hauptarmatur.

Im Stand der Technik bekannt sind in Reihe geschaltete Motorsteuerventile. Solche werden zum Teil auch in Verbindung mit einem Primärkreissicherheitsventil eingesetzt. Da diese Motorsteuerventile jedoch nach dem Arbeitsprinzip arbeiten, dürfen sie nach den einschlägigen sicherheitstechnischen Regelwerken nicht ausschließlich verwendet werden. So sieht z.B. das deutsche Regelwerk TRD 421 vor, daß bei Vorhandensein von drei Sicherheitsventilen, die ein Druckbehältnis absichern, nur ein Sicherheitsventil Steuerventile haben darf, die nach dem Arbeitsprinzip arbeiten. Die beiden anderen vorhandenen Sicherheitsventile müssen dabei Steuereinrichtungen aufweisen, die nach dem Ruheprinzip arbeiten.

Als in Reihe geschaltete Steuerventile, die nach dem Ruheprinzip arbeiten, sind nur Magnetventile bekannt. Diese können jedoch nicht im Primärkreis eines Kernkraftwerkes eingesetzt werden, weil sie möglicherweise bei Spannungsausfall öffnen.

Bekannte federbelastete Steuerventile, wie sie beispielsweise eingangs beschrieben sind, können wegen ihrer Konstruktion nicht in Reihe geschaltet werden. Aus diesem Grunde werden gegenwärtig im Primärkreis federbelastete Steuerventile durchweg nur in Einzelsteuerventil-Anordnungen eingesetzt, d.h. selbst wenn mehrere Ventile vorgesehen sind, so sitzt in der Steuerleitung des Sicherheitsventils letztlich nur ein einziges Steuerteil, das das Sicherheitsventil belastet oder entlastet. Die relativ hohe Schließversagenswahrscheinlichkeit wird als zwangsläufig in Kauf genommen.

Aufgabe der Erfindung ist es, eine Steuereinrichtung für eine Armatur anzugeben, die zwar Belastungsfedern enthalten kann, aber trotzdem zu einer geringen Schließversagenswahrscheinlichkeit der Armatur führt.

Hierzu wird eine Steuereinrichtung angegeben, durch welche eine Armatur mittels einer Steuerleitung zum Öffnen entweder entlastet oder belastet wird, die Armatur also entweder nach dem Entlastungsprinzip oder nach dem Belastungsprinzip arbeiten kann. Die Steuereinrichtung kann auch ohne elektromagnetische oder sonstige Zusatzbelastungen arbeiten.

Die Steuereinrichtung weist zur Lösung der Aufgabe mindestens zwei federbelastete Steuerventile auf sowie eine gleich große Anzahl von Steuerteilen. Jedes der Steuerteile ist einem der Steuerventile zugeordnet und damit verbunden. Erfindungsgemäß sind die Steuerteile an der Steuerleitung angeordnet. Eine nach dem Entlastungsprinzip arbeitende Armatur öffnet dann und nur dann, wenn alle Steuerteile sich in einer die Armatur entlastenden Stellung befinden. Die Armatur schließt sich, sobald auch nur eines der Steuerteile sich in einer die Armatur belastenden Stellung befindet. Arbeitet die Armatur nach dem Belastungsprinzip, so öffnet diese dann und nur dann, wenn die Steuerteile sich in einer die Armatur belastenden Stellung befinden, und schließt wieder, sobald sich auch nur eines der Steuerteile in einer die Armatur entlastenden Stellung befindet.

Die Erfindung geht davon aus, daß die Schließversagenswahrscheinlichkeit umso kleiner wird, je mehr Steuerteile unabhängig voneinander arbeiten, wobei jedes Steuerteil allein bereits die Armatur schließt. Mit einer Kombination unabhängig wirkender Steuerteile läßt sich somit die Schließversagenswahrscheinlichkeit der Armatur deutlich verbessern. So ergibt die Kombination von beispielsweise zwei Steuerteilen mit einer Schließversagenswahrscheinlichkeit von jeweils 10⁻²/Anforderung eine Gesamtschließversagenswahrscheinlichkeit von (10⁻²)²/Anforderung, also von 10⁻⁴/Anforderung. Damit ist auch eine Übereinstimmung der Schließversagenswahrscheinlichkeit der Armatur mit derjenigen der kombinierten Steuerteile erreicht.

In vorteilhafter Weise enthalten die Steuerteile Ventile, die von den zugehörigen Steuerventilen betätigt werden und in der Steuerleitung der Armatur in Reihe geschaltet sind. Dabei weist jedes der Steuerteile einen ersten Anschluß den ("Steueranschluß", der über einen Steuerkanal mit dem zugeordneten Steuerventil verbunden ist) und zwei zweite Anschlüsse auf ("Arbeitsanschlüsse", mit denen das Steuerteil in die Steuerleitung der Armatur integriert ist). Ein Arbeitsanschluß jedes Steuerteils ist also entweder unmittelbar (beispielsweise über eine Zuleitung) oder über ein oder mehrere Steuerteile (also mittelbar) mit der Armatur verbunden. Es ist also nur ein einziges Steuerteil direkt über einen Arbeitsanschluß mit der Armatur verbunden, während der andere Arbeitsanschluß dieses Steuerteils an einen Arbeitsanschluß eines anderen Steuerteils angeschlossen ist. Als "Reihenschaltung" bzw. "Tandem-Ventil" ist diese Anordnung bezeichnet, weil ein von der Armatur herrührendes oder zur Armatur hin strömendes Druckmedium hintereinander eine Mehrzahl der Steuerteile passiert.

Als weiterhin vorteilhaft wird es angesehen, daß die jeweiligen Steuerventile und/oder Steuerteile dieselbe Bauart aufweisen. Dadurch werden Fabrikation und Lagerhaltung auf wenige Komponenten beschränkt und Konstruktion und Montage übersichtlicher.

In einer vorteilhaften Ausführungsform weist mindestens eines der Steuerventile der Steuereinrichtung einen Druck-Weg-Umformer auf. Dieser Druck-Weg-Umformer, ein Auffüllkegel und ein Entlastungskegel sind derart angeordnet, daß sie in mechanische Wechselwirkung miteinander treten (zumindest in manchen Stellungen z.B. miteinander verbunden sind) und in gleicher Richtung gleichzeitig verschoben werden können. Der Auffüllkegel ist in einer ersten Kammer durch eine relativ geringe Kraft gegen einen Ventilsitz ("Auffüllkegelsitz") verschiebbar angeordnet. Er dient dazu, eine druckführende Anschlußleitung, die in die erste Kammer einmündet, gegenüber einem Steuerkanal, der diese erste Kammer mit dem Steuerteil verbindet, abzusperren oder zu öffnen. Der Entlastungskegel ist in einer zweiten Kammer angeordnet und durch eine relativ große Kraft von einem entsprechenden Ventilsitz ("Entlastungskegelsitz") abhebbar. Durch Abhebung des Entlastungskegels von seinem Sitz wird eine Verbindung hergestellt zwischen dem Kanal, der vom Steuerteil zur ersten Kammer führt, und dem Raum oberhalb des ersten Sitzes einerseits und einer Steuerventil-Drainage (z.B. einer zur Umgebung offenen Ableitung) andererseits.

In einer besonders vorteilhaften Ausführung ist mindestens eines der Steuerventile der Steuereinrichtung so ausgestaltet, wie in der deutschen Anmeldung DE-C- 196 28 610.7 vorgeschlagen. Hierbei ist der Druck-Weg-Umformer mit dem Auffüllkegel und dem Entlastungskegel auf einer gemeinsamen Mittelachse angeordnet. Die Anordnung ist so ausgeführt, daß Auffüllkegel und Entlastungskegel mit dem Druck-Weg-Umformer mechanisch verbindbar und in gleicher Richtung wie der Umformer (also z.B. gleichzeitig) verschiebbar sind.

In besonders vorteilhafter Weise ist der Druck-Weg-Umformer mit einem Stößel versehen. Dieser Stößel ist an seinem unteren Ende mit dem Druck-Weg-Umformer verbunden. Das obere Ende des Stößels befindet sich unterhalb und in unmittelbarer Nähe zum Entlastungskegel. Er ist so verschiebbar, daß er bei entsprechender Verschiebung den Entlastungskegel an seiner Unterseite berührt. Der Stößel wird in einer Verlängerung des Auffüllkegels geführt. Die zweite Kammer mit dem Sitz des Entlastungskegels befindet sich im Inneren des Auffüllkegels.

Die Funktionsweise der Steuereinrichtung soll an den nachstehend aufgeführten Ausführungsbeispielen erläutert werden. Es zeigen:
- Figur 1: ein federbelastetes Tandem-Steuerventil, das nach dem Entlastungsprinzip arbeitet, mit einem Sicherheitsventil, wobei Fig. 1a das Sicherheitsventil und Fig. 1b die Steuerteile in Vergrößerung darstellen;
- Figur 2: ein federbelastetes Tandem-Steuerventil, das nach dem Belastungsprinzip arbeitet, wobei Fig. 2a das entsprechende Sicherheitsventil vergrößert darstellt, und
- Figur 3: ein einzelnes Steuerventil mit einem Sicherheitsventil, das nach dem Entlastungsprinzip arbeitet, wobei das einzelne Steuerventil in Fig. 3a in größerem Maßstab dargestellt ist.

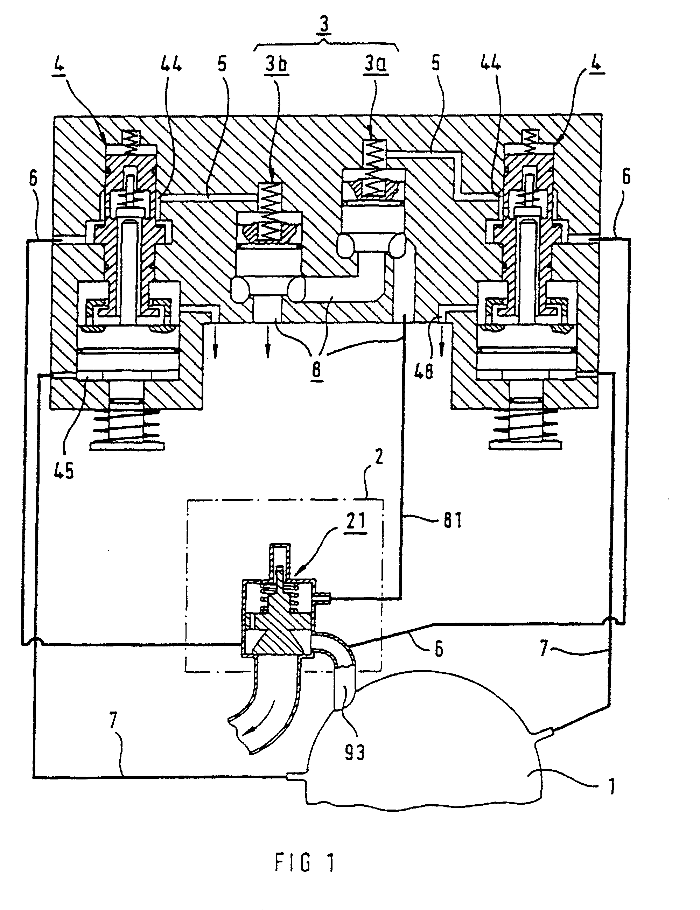

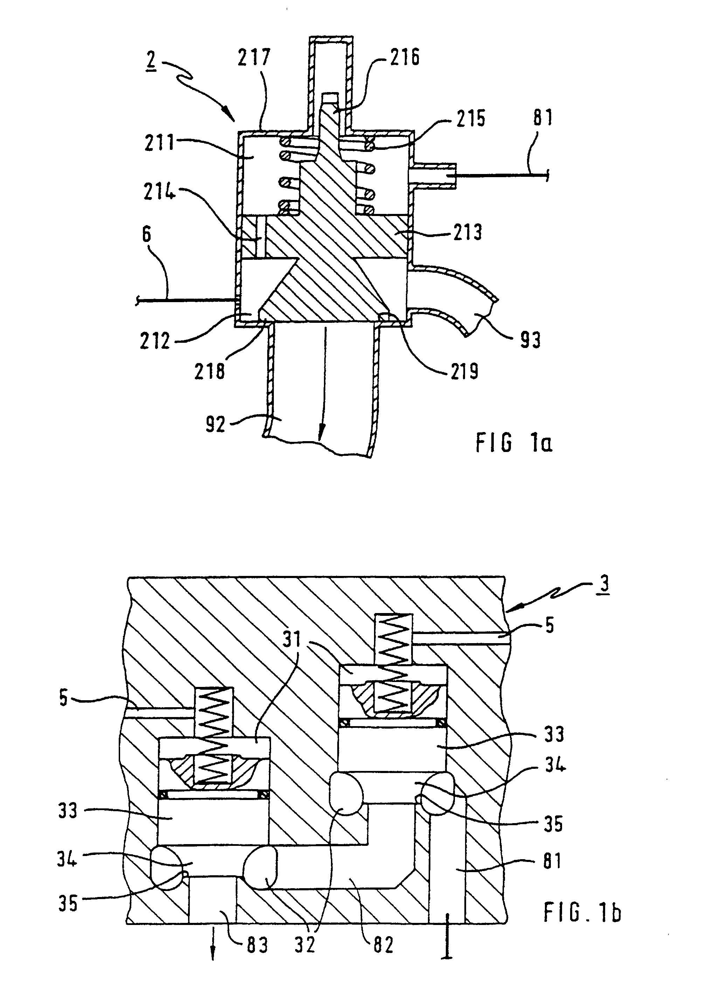

In Figur 1 ist eine Steuereinrichtung für ein Sicherheitsventil 2 zu erkennen. Dieses Sicherheitsventil 2 dient der Drukkentlastung eines (Reaktor)Druckbehälters 1. Das Sicherheitsventil 2 in diesem Ausführungsbeispiel ist ein nach dem Entlastungsprinzip arbeitendes Sicherheitsventil 21 (Fig. la). Zur Steuerung des Sicherheitsventils 2 sind je zwei Steuerventile 4 und Steuerteile 3 (Fig. 1b) vorgesehen. Die Steuerteile 3 und Steuerventile 4 sind im Verhältnis zum Sicherheitsventil 2 aus Gründen der besseren Erkennbarkeit der zeichnerischen Darstellung in einem weitaus größeren Maßstab dargestellt. Aus denselben Gründen ist der Druckbehälter 1 in einem gegenüber dem Sicherheitsventil 2 erheblich kleineren Maßstab nur schematisch angedeutet.

Eine Anordnung, bei der ein Sicherheitsventil 2 von je zwei Steuerteilen 3 und Steuerventilen 4 gesteuert wird, wird als "Tandem-Anordnung" bezeichnet.

Das nach dem Entlastungsprinzip arbeitende Sicherheitsventil 21 ist mit dem Druckbehälter 1 verbunden über eine Druckleitung 93. Diese Druckleitung 93 mündet in einen unteren Ventilraum 212. Dieser untere Ventilraum 212 ist von einem oberen Ventilraum 211 (dem "Steuerraum" des Ventils) durch eine Ventilplatte 213 getrennt. Oberer Ventilraum 211 und unterer Ventilraum 213 kommunizieren miteinander durch eine Bohrung 214, die durch die Ventilplatte 213 führt. Zur Unterstützung der Schließkraft ist oberhalb der Ventilplatte 213 eine Ventilfeder 215 angebracht, deren eines Ende auf der Ventilplatte 213 und deren anderes Ende an der Ventilgehäusewand 217 ansteht. Im geschlossenen Ventilzustand wird die Druckabführleitung 92 durch den Ventilkegel 218 verschlossen. Dieser Ventilkegel 218 sitzt mit seinem unteren Ende auf dem Kegelsitz 219 auf.

Eine Entlastungsleitung 81, die Teil einer Steuerleitung 8 des Sicherheitsventils 21 ist, verbindet den oberen Ventilraum 211 mit einem Arbeitsanschluß am unteren Raum 32 eines ersten Steuerteiles 3a, der ebenfalls ein Ventil darstellt. Dieser untere Raum 32 ist gegenüber einem oberen Raum 31 dieses ersten Steuerteil 3a getrennt durch einen Steuerteilkolben 33, dessen unterer Abschluß 34 kegelstumpfartig ausgebildet ist. Der untere Abschluß 34 des Steuerteilkolbens 33 verschließt eine Zwischenleitung 82, die als weiterer Teil der Steuerleitung 8 dazu dient, den unteren Raum 32 des Steuerteils 3a mit dem unteren Raum 32 eines zweiten Steuerteils 3b zu verbinden. Dieses Steuerteil 3b ist mit dem Steuerteil 3a gleicher Bauart. Es weist einen Steuerteilkolben 33 auf, der den unteren Raum 32 des Steuerteils 3b von dessen oberem Raum 31 trennt. Dieser Steuerteilkolben 33 weist ebenfalls einen kegelstumpfartigen unteren Abschluß 34 auf. Dieser kegelstumpfartige Abschluß 34 verschließt eine zum Steuerleitungssystem 8 gehörige Ableitung 83, die vom unteren Raum 32 des Steuerteils 3b ausgeht und als Ende der Steuerleitung 8 zum Außenraum der Steuereinrichtung bzw. einer Drainage führt.

Die oberen Räume 31 der Steuerteile 3a und 3b sind über Zwischenkanäle 5 verbunden mit den Steuerventilen 4. Dabei münden die Steuerkanäle 5 in eine erste Kammer 44 der Steuerventile 4. Diese erste Kammer 44 ist über eine Anschlußleitung 6 verbunden mit entweder dem unteren Ventilraum 212 direkt oder mit der Druckleitung 93, die ebenfalls in den unteren Ventilraum 212 mündet. Eine zweite Kammer 45 der Steuerventile 4 ist mit dem Druckbehälter 1 verbunden über Anschlußleitungen 7.

Das nach dem Entlastungsprinzip arbeitende Sicherheitsventil 21 ist bei normalem Betriebsdruck geschlossen, d.h. der Ventilkegel 218 befindet sich auf dem Kegelsitz 219. Im Steuerleitungssystem 8 ist die Entlastungsleitung 81 mit Druck beaufschlagt. Dieser Druck wirkt auch auf die Oberseite der Ventilplatte 213, so daß der Ventilkegel 218 auf seinen Sitz 219 gepreßt wird. Der Druck in Leitung 81 und dem oberen Ventilraum 211 wird stetig dadurch aufgebaut, daß der obere Ventilraum 211 mit dem unteren Ventilraum 212 über die Bohrung 214 in der Ventilplatte 213 kommuniziert. Da im Schließzustand des nach dem Entlastungsprinzip arbeitenden Sicherheitsventils 21 der Steuerteilkolben 33 des Steuerteils 3a mit seinem unteren Abschluß 34 die Entlastungsleitung 81 gegenüber der Zwischenleitung 82 und damit auch gegenüber der Ableitung 83 absperrt, kann der in Leitung 81 und dem oberen Ventilraum 211 aufgebaute Druck nicht entweichen und beaufschlagt deswegen die Oberseite der Ventilplatte 213. Da die Summe der für den Schließdruck wirksamen Flächen, nämlich die der Ventilplatte 213, die der auf der Ventilplatte 213 befindlichen Ventilführungen 216 und der des Ventilkegels 218 größer ist als die für den Gegendruck wirksame Fläche an der Unterseite der Ventilplatte 213, wird der Ventilkegel 218 auf seinen Kegelsitz 219 gepreßt. Unterstützt wird die Schließstellung durch die Ventilfeder 215.

Die Schließstellung des nach dem Entlastungsprinzip arbeitenden Sicherheitsventils 21 läßt sich nur dadurch erreichen, daß sich in der Entlastungsleitung 81 Druck aufbaut. Hierzu ist es erforderlich, daß die Entlastungsleitung 81 gegenüber der Ableitung 83 abgesperrt ist. Die Absperrung der Entlastungsleitung 81 gegenüber der Ableitung 83 erfolgt in der Weise, daß wenigstens durch eines der Steuerteile 3 das Steuerleitungssystem 8 geschlossen ist. Im Normalfall wird das Steuerleitungssystem 8 durch beide Steuerteile 3 geschlossen. Hierbei stehen die Steuerteilkolben 33 mit ihren kegelstumpfartigen unteren Abschlüssen 34 an einem Sitz 35 an. Damit wird durch das erste Steuerteil 3a die Zwischenleitung 82 gegenüber der ersten Leitung 81 gesperrt und durch das andere Steuerteil 3b wird die Zwischenleitung 82 gegenüber der Ableitung 83 abgesperrt. Die Absperrung erfolgt in der Weise, daß die oberen Räume 31 der Steuerteile 3 mit Druck beaufschlagt werden und dadurch die Steuerteilkolben 33 mit ihren unteren Abschlüssen 34 auf die Sitze 35 gedrückt werden.

Erreicht nunmehr der Druck im Druckbehälter einen kritischen Wert, so werden die oberen Räume 31 der Steuerteile 3 durch die Steuerventile 4 druckentlastet. Da der untere Raum 31 des ersten Steuerteils 3a mit der Entlastungsleitung 81 in Verbindung steht und daher mit Druck beaufschlagt ist, wird der Steuerteilkolben 33 des ersten Steuerteils 3a von seinem Sitz 35 nach oben gedrückt. Der in der Entlastungsleitung 81 anstehende Druck kann sich nunmehr durch die Zwischenleitung 82 in den unteren Raum 32 des zweiten Steuerteils 3b ausbreiten. Da auch bei dem zweiten Steuerteil 3b der obere Raum 31 durch das dem Steuerteil 3b zugeordnete Steuerventil 4 druckentlastet ist, wird der Steuerteilkolben 33 des zweiten Steuerteils 3b aus seinem Sitz 35 nach oben gedrückt. Hierdurch wird die Ableitung 83 freigegeben. Es entsteht eine druckdurchlässige Verbindung zwischen dem oberen Ventilraum 211 des nach dem Entlastungsprinzip arbeitenden Sicherheitsventils 21 und dem die Steuereinrichtung umgebenden Raum. Dadurch wird der obere Ventilraum 211 druckentlastet. Das Sicherheitsventil 21 öffnet aufgrund des im unteren Ventilraum 212 anstehenden Druckes. Beim Öffnen des nach dem Entlastungsprinzip arbeitenden Ventils 21 wird der Ventilkegel 218 von seinem Kegelsitz 219 entfernt, so daß eine Verbindung zwischen der Druckleitung 93 und der Druckabführung 92 entsteht. Über die Druckleitung 93 und die Druckabführleitung 92 kann Medium aus dem Druckbehälter 1 entweichen und so der Druck in dem Druckbehälter 1 abgebaut werden.

Sinkt der Druck im Druckbehälter 1 unter einen bestimmten vorhergesehenen Wert, so werden die oberen Räume 31 der Steuerteile 3 durch die Steuerventile 4 mit Druck beaufschlagt. Hierdurch werden die Steuerteilkolben 33 mit ihren unteren Abschlüssen 34 auf die Sitze 35 gepreßt. Damit werden die Durchgänge von der Entlastungsleitung 81 zu der Zwischenleitung 82 und von der Zwischenleitung 82 zur Ableitung 83 versperrt. Durch die Bohrung 214 in der Ventilplatte 213 des nach dem Entlastungsprinzip arbeitenden Sicherheitsventil 21 hindurch baut sich in dem oberen Ventilraum 211 und in der ersten Leitung 81 ein Druck auf, der den Ventilkegel 218 auf den Kegelsitz 219 preßt. Das nach dem Entlastungsprinzip arbeitende Sicherheitsventil 21 schließt.

Versagt - aus welchen Gründen auch immer - eines der beiden Steuerteile 3, so wird das Steuerleitungssystem 8 dennoch durch zumindest eines der Steuerteile 3 abgeschlossen. Hierdurch kann sich in dem oberen Ventilraum 211 ein Druck aufbauen, der den Ventilkegel 218 auf seinen Kegelsitz 219 preßt.

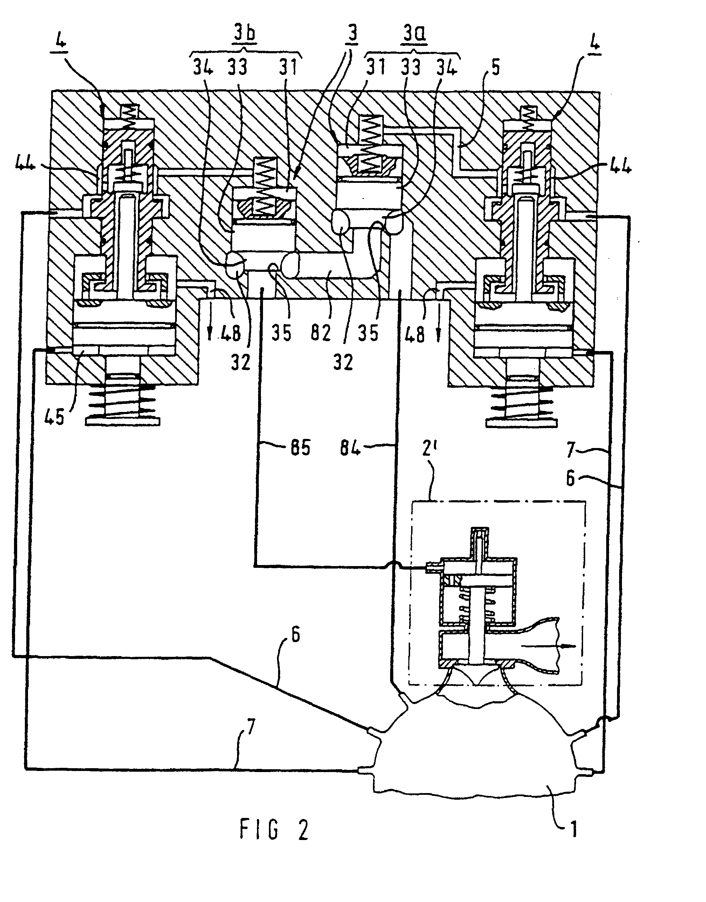

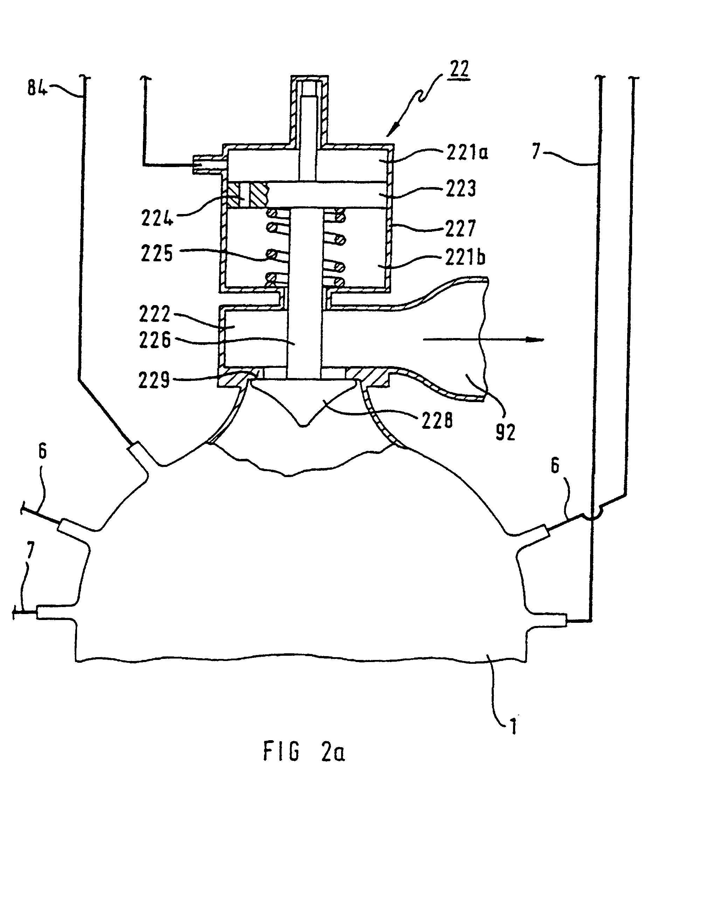

In Figur 2 ist eine Tandem-Steuerventil-Anordnung dargestellt, die nach dem Belastungsprinzip arbeitet. An einem Druckbehälter 1 sitzt ein Sicherheitsventil 2', wobei dieses Sicherheitsventil 2' ein nach dem Belastungsprinzip arbeitendes Sicherheitsventil 22 (Fig 2a) ist. Dieses nach dem Belastungsprinzip arbeitende Sicherheitsventil 22 wird gesteuert von zwei gleichen Steuerteilen 3, die jeweils mit einem Steuerventil 4 verbunden sind. Die beiden Steuerventile 4 sind von gleicher Bauart.

Das nach dem Belastungsprinzip arbeitende Sicherheitsventil 22 ist aus darstellerischen Gründen mit einen dem Druckbehälter 1 gegenüber größeren Maßstab, den Steuerteilen 3 und den Steuerventilen 4 gegenüber kleineren Maßstab dargestellt.

Das nach dem Belastungsprinzip arbeitende Sicherheitsventil 22 ist mit dem Druckbehälter 1 verbunden. Es weist einen unteren Ventilraum 222 auf, an dem eine Dampfabführleitung 92 angeschlossen ist. Im geschlossenen Ventilzustand ist der untere Ventilraum 222 gegen den Druckbehälter 1 verschlossen durch einen Ventilkegel 228, der durch den im Druckbehälter 1 herrschenden Druck gegen seinen Sitz 229 gepreßt wird. Ventilseitig des Ventilkegels 228 ist an diesem ein Ventilstößel 226 angebracht, welches durch den unteren Ventilraum 222 in einem oberen Ventilraum 221 führt. Am oberen Ende des Ventilstößels 226 befindet sich eine Ventilplatte 223, die den oberen Ventilraum 221 in einen oberen Halbraum 221a und einen unteren Halbraum 221b teilt. Die Ventilplatte 223 ist mit einer Bohrung 224 versehen, durch welche der obere Halbraum 221a mit dem unteren Halbraum 221b kommuniziert. Zwischen der Unterseite der Ventilplatte 223 und dem Boden des oberen Ventilraums 221 ist im unteren Halbraum 221b eine das Ventilstößel 226 umgebende Feder 225 angebracht. Die Abtrennung des oberen Ventilraums 221 von dem unteren Ventilraum 222 erfolgt dabei durch eine Einschnürung der Ventilgehäusewand 227.

Über eine erste Leitung 84, die zu einer Steuerleitung 8 gehört, ist der Druckbehälter 1 verbunden mit einem unteren Raum 32 eines ersten Steuerteils 3a. Dieser untere Raum 32 des ersten Steuerteils 3a ist bei Normalbetrieb der Anlage, also bei Schließposition des Sicherheitsventils 2, durch einen kegelstumpfartigen unteren Abschluß 34 eines Steuerteilkolbens 33 gegenüber einer ebenfalls zur Steuerleitung 8 gehörenden Zwischenleitung 82 abgeschlossen, wobei die Zwischenleitung 82 in einem unteren Raum 32 eines zweiten Steuerteils 3b mündet. Der untere Raum 32 des zweiten Steuerteils 3b weist eine ebenfalls zur Steuerleitung 8 gehörige Belastungsleitung 85 auf, welche diesen mit dem oberen Halbraum 221A des oberen Ventilraums 221 verbindet. Im Normalbetrieb der Anlage ist auch diese Belastungsleitung 85 von dem unteren Raum des zweiten Steuerteils 3b durch den kegelstumpfartigen unteren Abschluß 34 eines Steuerteilkolbens 33 des Steuerteils 3b abgesperrt.

Die Steuerteile 3 sind wie in Figur 1 jeweils über einen Steuerkanal 5 verbunden mit einer ersten Kammer 44 eines Steuerventils 4. Diese erste Kammer 44 der Steuerventile 4 kommuniziert über eine Anschlußleitung 6 mit dem Druckbehälter 1. Desweiteren weisen die Steuerventile 4 eine zweite Kammer 45 auf, die über Anschlußleitungen 7 ebenfalls mit dem Druckbehälter 1 verbunden ist.

Im normalen Betriebszustand des Druckbehälters ist das nach dem Belastungsprinzip arbeitende Sicherheitsventil 22 geschlossen. Der obere Ventilraum 221 ist druckfrei, ebenso die an ihn angeschlossene Belastungsleitung 85, die diesen mit dem unteren Raum 32 des Steuerteils 3b verbindet. Auch die, die unteren Räume 32 der Steuerteile 3a und 3b verbindende Zwischenleitung 82 ist druckfrei. Hingegen steht die erste Leitung 84, die den Druckbehälter 1 mit dem unteren Raum 32 des ersten Steuerteils 3a verbindet unter dem gleichen Druck wie der Druckbehälter 1. Damit der Steuerteilkolben 33 des ersten Steuerteils 3a nicht durch den in seinem unteren Raum 32 anstehenden Druck von seinem Sitz 35 gehoben wird, ist dieser Steuerteilkolben 33 in einem oberen Raum 31 mit Druck beaufschlagt. Desgleichen ist der Steuerteilkolben 33 des Steuerteils 3b in einem oberen Raum 31 mit Druck beaufschlagt. Dieser Druck rührt her von einer Verbindung des oberen Raumes 31 der Steuerteile 3 über die Steuerkanäle 5, die ersten Kammern 44 der Steuerventile 4 und der Anschlußieitungen 6 zu dem Druckbehälter 1.

Steigt der Druck im Druckbehälter über einen kritischen Wert an, so wird der Raum 31 der Steuerteile 3 durch das Steuerventil 4 druckentlastet. Aufgrund des über die erste Leitung 84 im unteren Raum 32 des ersten Steuerteils 3a anstehenden Druckes wird der Steuerteilkolben 33 von seinem Sitz 35 nach oben gedrückt. Dadurch kann sich der in der ersten Leitung 84 anstehende und vom Druckbehälter 1 herrührende Druck in die Zwischenleitung 82 hinein ausbreiten und den unteren Raum 32 des zweiten Steuerteils 3b mit Druck beaufschlagen. Aufgrund dieser Druckbeaufschlagung wird sodann der Steuerteilkolben 33 dieses zweiten Steuerteils 3b von seinem Sitz 35 nach oben gedrückt. Hierdurch wird die Belastungsleitung 85 freigegeben, so daß sich der Druck weiter ausbreiten kann bis hinein in den oberen Halbraum 221a des oberen Ventilraums 221. Dort beaufschlagt dieser Druck die Ventilplatte 223 und drückt sie nach unten. Über den mit der Ventilplatte 223 verbundenen Ventilstößel 226 wird der Ventilkegel 228 nach unten von seinem Kegelsitz 229 gedrückt. Das nach dem Belastungsprinzip arbeitende Sicherheitsventil 22 öffnet. Medium aus dem Druckbehälter 1 strömt dann in den unteren Ventilraum 222, wo es über die Dampfabführleitung 92 abgeführt wird. Dadurch senkt sich der Druck im Druckbehälter 1. Wird ein bestimmter Druckwert unterschritten, so wird der obere Raum 31 der Steuerteile 3 über die Steuerventile 4 mit Druck beaufschlagt. Der kegelstumpfartige untere Abschluß 34 der Steuerteilkolben 33 wird auf seinen Sitz 35 gepreßt. Hierdurch wird die Druckbeaufschlagung des oberen Halbraums 221a des oberen Ventilraums 221 abgestellt. In dem oberen Halbraum 221a und in der Belastungsleitung 85 dann noch anstehender Druck entweicht über die Bohrung 224 in den unteren Halbraum 221b. Durch den vom Druckbehälter 1 herrührenden Druck wird der Ventilkegel 228 wieder auf seinen Kegelsitz 229 gepreßt und das nach dem Belastungssystem arbeitende Sicherheitsventil 22 schließt.

Sollte - aus welchen Gründen auch immer - eines der Steuerteile 3 versagen, so wird eine Absperrung des Steuerleitungssystems 8 auch durch ein einziges der Steuerteile 3 erreicht. Dadurch ist es gewährleistet, daß selbst bei Versagen eines Steuerteils 3 ein nach dem Belastungsprinzip arbeitendes Sicherheitsventil 22 in die Schließstellung zurückgeführt wird.

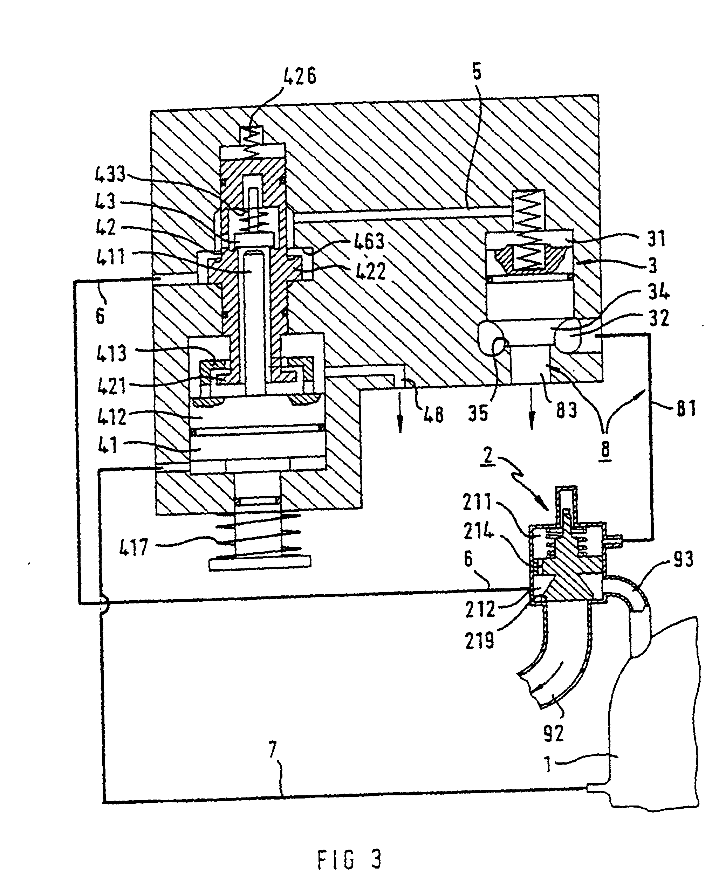

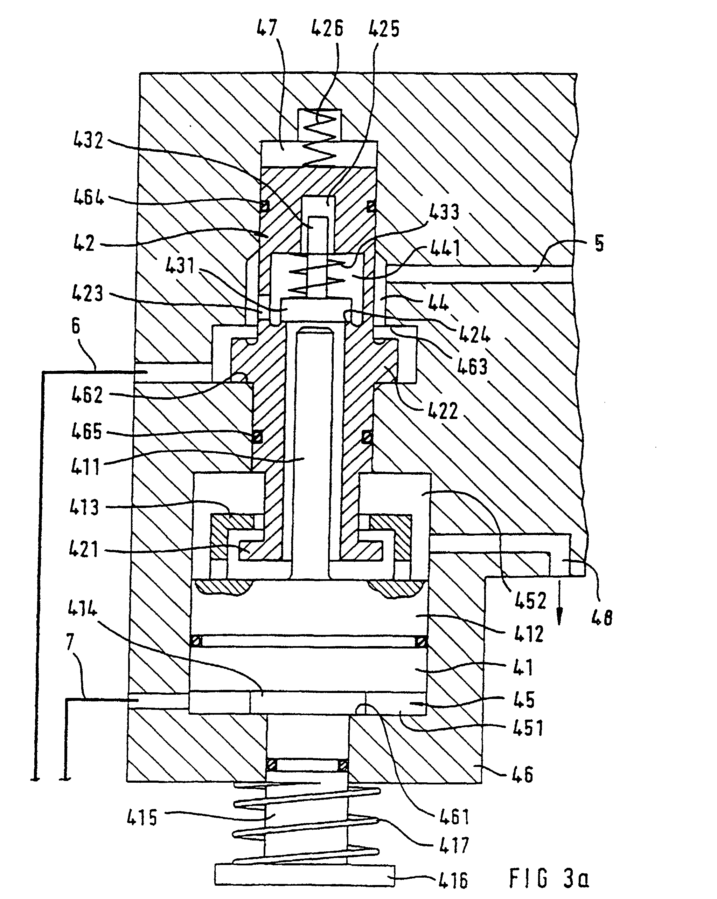

Die Steuerung der Steuerteile 3 durch die Steuerventile 4 erfolgt in gleicher Weise unabhängig davon, ob das Sicherheitsventil 2 nach dem Belastungsprinzip oder dem Entlastungsprinzip arbeitet. Da die beiden Steuerteile 3a und 3b und die zugehörigen Steuerventile 4 jeweils baugleich, sind genügt es, Aufbau und Funktion jeweils eines Steuerventils 4 und Steuerteils 3 zu erörtern. In Figur 3 ist ein Steuerventil 4 und ein Steuerteil 3 zusammen mit einem Sicherheitsventil 2 dargestellt, das nach dem Entlastungsprinzip arbeitet. Desweiteren ist ein Ausschnitt aus einem Druckbehälter 1 zu erkennen. Um die Funktionsweise von Steuerventil 4 und Steuerteil 3 besser erläutern zu können, wird hier von einer Darstellung der Reihenschaltung der Steuerteile 3 abgesehen.

Das Sicherheitsventil 2 ist wie bei Figur 1 erläutert aufgebaut. Es ist mit einer Entlastungsleitung 81, die zu einer Steuerleitung 8 gehört, verbunden mit einem unteren Raum 32 des Steuerteils 3. In Verschlußstellung des Sicherheitsventils 2 befindet sich der untere Abschluß 34 des Steuerteilkolbens 33 auf dem Sitz 35. Dadurch wird die ebenfalls zur Steuerleitung 8 gehörige Ableitung 83 von dem unteren Raum 32 des Steuerteils 3 und damit von der Entlastungsleitung 81 abgesperrt. Die Ableitung 83 führt in einen druckfreien Raum außerhalb der Steuereinrichtung.

Der von dem unteren Raum 32 durch den Steuerteilkolben 33 abgeteilte obere Raum 31 des Steuerteils 3 ist über einen Zwischenkanal 5 verbunden mit einer ersten Kammer 44 des Steuerventils 4. Diese erste Kammer 44 wiederum ist über eine Anschlußleitung 6 verbunden mit dem unteren Ventilraum 212 des Sicherheitsventils 2 und steht somit über die Druckleitung 93 in Verbindung mit dem Druckbehälter 1. Alternativ ist es auch möglich, die Anschlußleitung 6 nicht über das Sicherheitsventil 2 zu führen, sondern direkt mit dem Druckbehälter 1 zu verbinden.

Das Steuerventil 4 weist drei Hauptkomponenten auf: Einen Druck-Weg-Umformer 41, einen Auffüllkegel 42 und einen Entlastungskegel 43. Der Druck-Weg-Umformer 41 befindet sich mit seinem Umformerkolben 412 in einer zweiten Kammer 45 des Steuerventils 4. Er teilt diese zweite Kammer 45 in einen unteren Halbraum 451 und einen oberen Halbraum 452. Der Umformerkolben 412 ist in der zweiten Kammer 45 verschiebbar angeordnet. An seiner Unterseite befindet sich eine erste Platte 414, deren horizontale Abmessungen kleiner als die des Umformerkolbens 412 sind. Der Unterteil dieser Platte 414 sitzt auf einer Schulter 461, die von der Innenwand des Gehäuses 46 des Steuerventils 4 gebildet wird, auf. Hierdurch wird gewährleistet, daß bei Verschiebung des Umformerkolbens 412 der untere Halbraum 451 der zweiten Kammer 45 stets ein Mindestvolumen aufweist. Dieser untere Halbraum 451 der zweiten Kammer 45 ist über eine Anschlußleitung 7 verbunden mit dem Druckbehälter 1, die im Bereich des Mindestvolumens mündet.

An die Unterseite der ersten Platte 414 schließt sich ein durch die Wand des Gehäuses 46 führender Bolzen 415 an. Dieser Bolzen 415 ragt teilweise in den Raum außerhalb des Gehäuses 46 hinein. An seinem Ende befindet sich eine zweite Platte 416. Zwischen dieser Platte 416 und der Außenwand des Gehäuses 46 ist eine kräftige Feder 417 angeordnet. Die Federkraft der Feder 417 wirkt der Verschiebung des Umformerkolbens 412 nach oben entgegen. Die Federkraft beträgt dabei beispielsweise 13 kN.

Auf der Oberseite des Umformerkolbens 412 ist ein Umformerstößel 411 angebracht. Dieser Umformerstößel 411 ist durch eine zylinderartige Verlängerung des Auffüllkegels 42 geführt. Befindet sich der Druckwegumformer 41 mit der ersten Platte 414 auf der Schulter 461, - die Stellung, die dem Normalbetrieb der Anlage entspricht - , so endet das Umformerstößel 411 kurz unterhalb des Entlastungskegels 43.

Die zylinderförmige Verlängerung des Auffüllkegels 42 weist an ihrem unteren Ende Klauen 421 auf. Diese Klauen 421 sind so ausgestaltet, daß sie von auf der Oberseite des Umformerkolbens 412 angebrachten Klauen 413 erfaßt werden können.

Bei Normalbetrieb der Anlage befindet sich der Auffüllkegel 42 mit einem Sitzanschlag 422 auf einem (unteren) Auffüllkegelsitz ("Auffüllkegel-Anschlag") 462, der von dem Gehäuse 46 gebildet wird. Seitlich des Auffüllkegelanschlags 462 befindet sich der Anschluß der Anschlußleitung 6 zur ersten Kammer 44. Diese erste Kammer 44 wird begrenzt von der Außenwand des Auffüllkegels 42 im Bereich oberhalb des Sitzanschlages 422 und der hierzu benachbarten Innenwand des Gehäuses 46. Diese erste Kammer 44 ist über einen Durchlaß 423 in der Wand des Auffüllkegels 42 verbunden mit einer inneren Kammer 441. Diese innere Kammer 441 ist als Hohlraum des Auffüllkegels 42 ausgebildet und umfaßt den Entlastungskegel 43. Dieser Entlastungskegel 43 weist in seinem unteren Bereich einen Entlastungskegelkolben 431 auf, der mit seinem unteren Rand auf einem von einer Schulter des Auffüllkegels 42 gebildeten Entlastungskegelsitz 424 im Normalzustand der Anlage angeordnet ist. Oberhalb des Entlastungskegelkolbens 431 weist der Entlastungskegel 43 einen Entlastungskegelbolzen 432 auf, der nach oben gerichtet in eine Aussparung 425 des Auffüllkegels 42 eingreift. Zwischen der Innenwand des Auffüllkegels 42 am oberen Ende der inneren Kammer 441 und der Oberseite des Entlastungskegelkolbens 431 ist eine Feder 433 angebracht, die mit geringer Federkraft den Entlastungskegel 43 auf seinen Entlastungskegelsitz 424 drückt.

Oberhalb des Auffüllkegels 42 befindet sich eine dritte Kammer 47, die durch die obere Außenwand des Auffüllkegels 42 und die innere Wand des Gehäuses 46 gebildet wird. Innerhalb dieser dritten Kammer befindet sich eine Feder 426, die mit geringer Federkraft den Auffüllkegel 42 gegen den Auffüllkegelanschlag 462 drückt.

Im Normalzustand des Druckbehälters 1 steht dieser unter einem Druck von beispielsweise 150 bar. Dieser Druck des Druckbehälters 1 wird über die Anschlußleitung 7 dem unteren Halbraum 451 der zweiten Kammer 45 mitgeteilt. Dieser Druck wirkt auf den Druck-Weg-Umformer 41 und versucht, diesen nach oben zu drücken. Der Hub des Druck-Weg-Umformers 41 wird jedoch verhindert durch die ihn nach unten treibende Kraft der starken Feder 417.

Der Druck im Druckbehälter 1 teilt sich über die Anschlußleitung 6 durch die erste Kammer 44 und den Zwischenkanal 5 hindurch dem oberen Raum 31 des Steuerteils 3 mit. Dadurch wird der Steuerteilkolben 33 mit seinem kegelstumpfartigen unteren Abschluß 34 auf den Sitz 35 nach unten gepreßt.

Der vom Druckbehälter herrührende Druck wirkt auch in der ersten Kammer 44 und der inneren Kammer 441 wirkt. Am Auffüllkegel 42 wirkt dieser Druck jedoch kraftausgleichend, da die Dichtelemente 464, 465 (z.B. Faltenbälge) ober- und unterhalb der Kammern 44 und 441 jeweils den gleichen Querschnitt abdichten.

Nur die relativ schwache Feder 426 (auch der Federwiderstand von Bälgen wäre möglich) drückt den Auffüllkegel 42 im Normalbetrieb der Anlage mit seinem Sitzanschlag 424 gegen den Anschlag 462 des Gehäuses 46.

Der obere Halbraum 452 der zweiten Kammer 45 sowie die dritte Kammer 47 sind druckfrei.

Steigt der Druck im Druckbehälter 1 an, so erhöht sich damit zugleich der Druck in den bezeichneten druckbeaufschlagten Räumen um den gleichen Betrag. Der Druck-Weg-Umformer 41 wird nach oben gedrückt, bis er mit seinem Umformerstößel 411 an die Unterseite des Entlastungskegelkolbens 431 des Entlastungskegels 43 anschlägt. Erhöht sich der Druck im Druckbehälter 1 weiter, so schiebt der Druck-Weg-Umformer 41 über den Umformerstößel 411 und den Entlastungskegel 43 den Auffüllkegel 42 nach oben. Der Entlastungskegel 43 bleibt dabei mit seinem Entlastungskegelkolben 431 auf dem Entlastungskegelsitz 424, da ihn die durch den Druck in der inneren Kammer 441 herrschende hydraulische Schließkraft nicht von dem Entlastungskegelsitz 424 abheben läßt. Der Hubvorgang des Auffüllkegels setzt sich mit weiter steigendem Druck im Druckbehälter fort, bis der Auffüllkegel mit dem oberen Teil seines Sitzanschlages 422 an den oberen Auffüllkegelsitz 463 gedrückt wird. Durch Andrücken des Sitzanschlages 422 an den oberen Auffüllkegelsitz 463 wird die Verbindung zwischen der Anschlußleitung 6 und der ersten Kammer 44 unterbrochen. Ein weiterer Druckausgleich zwischen dem Druckbehälter 1 und der ersten Kammer 44 sowie dem Zwischenkanal und dem oberen Raum 31 des Steuerteils 3 findet nicht mehr statt. Der dort bis dahin herrschende Druck bleibt jedoch erhalten.

Bei weiterem Druckanstieg im Druckbehälter 1 steigt somit nur noch der Druck im unteren Halbraum 451 der zweiten Kammer 45, da diese mit dem Druckbehälter über die Anschlußleitung 7 kommuniziert. Bei einem Ansprechdruck von beispielsweise 176 bar wird der Druck-Weg-Umformer 41 weiter nach oben verschoben und drückt mit seinem Umformerstößel 411 den Entlastungskegel 43 gegen den in der inneren Kammer 441 herrschenden Druck von seinem Entlastungskegelsitz 424. Dadurch kann der in der inneren Kammer 441, der ersten Kammer 44, dem Steuerkanal 5 und dem oberen Raum 31 des Steuerteils 3 anstehende Druck durch das Innere der zylinderförmigen Verlängerung des Auffüllkegels 42 entweichen. Der Druckabbau erfolgt über den oberen Halbraum 452 der zweiten Kammer 45 durch eine vom oberen Halbraum 452 der zweiten Kammer 45 aus der Steuereinrichtung herausführenden Steuerventildrainage 48. Da nunmehr der obere Raum 31 des Steuerteils 3 nicht mehr druckbeaufschlagt ist, wird der Steuerteilkolben 33 durch den im unteren Raum 32 anstehenden Druck von seinem Sitz 35 nach oben gehoben. Hierdurch wird der Druck im oberen Ventilraum 211 des Sicherheitsventils 2 über die Entlastungsleitung 81 und die Ableitung 83 abgebaut. Das Sicherheitsventil 2 öffnet.

Mit der Öffnung des Sicherheitsventils 2 wird der Weg zur Dampfabführleitung 92 frei. Der Druckbehälter 1 baut seinen Druck ab. Hierdurch wird der untere Halbraum 451 der zweiten Kammer 45 des Steuerventils 4 druckentlastet, da durch die Anschlußleitung 7 zwischen diesem und dem Druckbehälter 1 ein Druckausgleich stattfindet. Durch die Federkraft der Feder 415 wird der Umformerkolben 412 entsprechend der Druckabsenkung im unteren Halbraum 451 nach unten gedrückt. Der Auffüllkegel 42 bleibt mit seinem Sitzanschlag 422 am (oberen) Auffüllkegelsitz 463. Er erfährt an der Unterseite des Sitzanschlages 422 eine hydraulische Kraft, die ihn entgegen seiner Schwerkraft nach oben drückt. Die hydraulische Kraft wird dadurch verursacht, daß der Raum unterhalb des Sitzanschlages 422 über die Anschlußleitung 6 nachwievor mit Druck beaufschlagt ist, während die erste Kammer 44 und die innere Kammer 441 nachwievor druckfrei sind. Die hydraulische Schließkraft am Auffüllkegelsitz 463 wird zwar durch die am Dichtelement 465 wirkende hydraulische Kraft nach unten verringert, eine Resultierende in Schließrichtung des Auffüllkegels 42 bleibt jedoch bestehen, weil der Querschnitt des Auffüllkegelsitzes 463 größer ist als der durch das Dichtelement 465 abgedichtete Querschnitt.

Durch die Absenkung des Druck-Weg-Umformers 41 und damit seines Umformerstößels 411 sinkt der Entlastungskegel 43 auf den Entlastungskegelsitz 424 zurück, angetrieben von seiner Feder 433. Damit wird die erste Kammer 44, die innere Kammer 441, der Steuerkanal 5 sowie der obere Raum 31 des Steuerteils 3 von der nach außen führenden Steuerventildrainage 48 abgetrennt. In diesem Zustand erfolgt keine Druckveränderung in den besagten Räumen.

Bei weiter sinkendem Druck im Druckbehälter 1 auf den Normaldruck von beispielsweise 150 bar wird der Druck-Weg-Umformer 41 weiter durch die Feder 417 nach unten verschoben, bis er schließlich mit seinen Klauen 413 in die Klauen 421 des Auffüllkegels 42 eingreift und diesen von seinem oberen Auffüllkegelsitz 463 löst. In diesem Moment breitet sich der Druck des Druckbehälters 1 über die Anschlußleitung 6 in der ersten Kammer 44, der inneren Kammer 441, dem Steuerkanal 5 und dem oberen Raum 31 des Steuerteils 3 aus. Der Auffüllkegel 42 wird mit seinem Sitzanschlag 422 gegen den Auffüllkegelanschlag 462 gedrückt. Außerdem wird der Steuerteilkolben 33 mit seinem kegelstumpfartigen unteren Abschluß 34 auf seinen Sitz 35 gepreßt. Hierdurch wird die Ableitung 83 gegenüber der Entlastungsleitung 81 verschlossen. In der Entlastungsleitung 81 und in dem oberen Ventilraum 211 baut sich über die Bohrung 214 Druck auf, der den Ventilkegel 218 gegen den Kegelsitz 219 preßt. Das Sicherheitsventil 2 schließt.

Durch diese Konstruktion gelingt es, daß das Sicherheitsventil erst bei einem relativ höheren Ansprechdruck von beispielsweise 176 bar öffnet, während es erst bei einem relativ niedrigen Druck von beispielsweise 150 bar schließt. Diese Schließdruckdifferenz ist erwünscht. Durch sie wird ein alternierendes Öffnen und Schließen des Sicherheitsventils 2, verursacht durch geringe Druckschwankungen, effektiv vermieden.

Wie zu den Figuren 1 und 2 erläutert, lassen sich eine Mehrzahl von Steuerteilen 3 mit den zugehörigen Steuerventilen 4 in Serie schalten. Die Bauteile der Einzelsteuerventile werden vorzugsweise in einem gemeinsamen Gehäuse untergebracht, wodurch ein sehr kompaktes Mehrfachsteuerventil - hier Tandem-Steuerventil - entsteht. Es ist nahezu unerheblich, ob der Ansprechdruck der einzelnen Steuerventile gleich oder unterschiedlich ist. Um jegliche Beeinflussung der beiden Steuerteile des Mehrfachsteuerventils - hier Tandem-Steuerventil - auszuschließen, ist es ratsam, den Ansprechdruck um einige Bar unterschiedlich zu wählen.

## Patentansprüche

1. Anordnung bestehend aus einer Armatur (2) und einer Steuereinrichtung mit mindestens zwei federbelasteten Steuerventilen (4) die jeweils ein eigenes Steuerteil (3,3a,3b) betätigen, zum öffnen der Armatur (2), die mittels einer Steuerleitung (81,82,83) durch Druckentlastung geöffnet wird, **dadurch gekennzeichnet, daß** die Steuerteile (3,3a,3b) an der Steuerleitung (81,82,83) derarts angeordnet sind, daß sie diese Armatur (2) dann und nur dann öffnen, wenn alle Steuerteile (3, 3a, 3b) sich in einer die Armatur entlastenden Stellung befinden, und daß die Steuerteile (3,3a,3b) die Armatur (2) schließen, sobald auch nur eines der Steuerteile (3,3a,3b) sich in einer die Armatur belastenden Stellung befindet.

2. Anordnung bestehend aus einer Armatur (2) und einer Steuereinrichtung mit mindestens zwei federbelasteten Steuerventilen (4), die jeweils ein eigenes Steuerteil (3,3a,3b) betätigen, zum Öffnen der Armatur (2'), die mittels einer Steuerleitung (84,82,85) durch Druckbelastung geöffnet wird, **dadurch gekennzeichnet, daß** die Steuerteile an der Steuerleitung (84,82,85) der Armatur (2') derart angeordnet sind, daß sie diese Armatur (2') dann und nur dann öffnen, wenn alle Steuerteile (3,3a,3b) sich in einer die Armatur (2') belastenden Stellung befinden, und daß die Steuerteile (3,3a,3b) die Armatur schließen, sobald auch nur eines der Steuerteile (3,3a,3b) sich in einer die Armatur (2') entlastenden Stellung befindet.

3. Anordnung bestehend aus einer Armatur (2) und einer Steuereinrichtung nach Anspruch 1 oder 2, **dadurch gekennzeichnet, daß** die Steuerteile Ventile enthalten, die von den Steuerventilen (4) betätigt werden und in der Steuerleitung in Reihe geschaltet sind.

4. Anordnung bestehend aus einer Armatur (2) und einer Steuereinrichtung nach einem der Ansprüche 1 bis 3, **dadurch gekennzeichnet, daß** die Armatur ein Sicherheitsventil (2,21,22) ist.

5. Anordnung bestehend aus einer Armatur (2) und einer Steuereinrichtung nach einem der Ansprüche 1 bis 4, **dadurch gekennzeichnet, daß** die jeweiligen Steuerventile (4) und/oder Steuerteile (3,3a,3b) dieselbe Bauart aufweisen.

6. Anordnung bestehend aus einer Armatur (2) und einer Steuereinrichtung nach einem der Ansprüche 1 bis 5, **dadurch gekennzeichnet, daß** mindestens eines der Steuerventile (4) einen Druck-Weg-Umformer (41) aufweist und der Umformer (41) mit einem Auffüllkegel (42) und mit einem Entlastungskegel (43) mechanisch verbindbar ist, die durch den Umformer (41) in gleicher Richtung verschiebbar sind;
- daß der Auffüllkegel (42) in einer ersten Kammer (44) durch eine geringere Kraft gegen einen ihm zugeordneten Auffüllkegelsitz (463) verschiebbar angeordnet ist, um eine druckführende Anschlußleitung (6), die in die erste Kammer (44) einmündet, abzusperren gegenüber einem Zwischenkanal (5) des Steuerteils (3,3a,3b);
- und daß der Entlastungskegel (43) in einer anderen Kammer (441)des Auffüllkegels (42) durch eine größere Kraft des Umformers (41) von seinem Entlastungskegelsitz (424) abhebbar angeordnet ist und beim Abheben vom Entlastungskegelsitz (424) den Zwischenkanal (5) des Steuerteils (3,3a,3b) und die erste Kammer (44) mit einer Steuerventildrainage (48) verbindet.

7. Anordnung bestehend aus einer Armatur (2) und einer Steuereinrichtung nach Anspruch 6, **dadurch gekennzeichnet, daß** der Druck-Weg-Umformer (41), der Auffüllkegel (42) und der Entlastungskegel (43) auf einer gemeinsamen Achse angeordnet und verschiebbar sind.

8. Anordnung bestehend aus einer Armatur (2) und einer Steuereinrichtung nach Anspruch 7, **dadurch gekennzeichnet, daß** der Druck-Weg-Umformer (41) mit einem unteren Ende eines Umformerstößels (411) verbunden ist, wobei das andere obere Ende des Umformerstößels (411) unterhalb und in unmittelbarer Nähe zum Entlastungskegel (43) sich befindet und so verschiebbar ist, daß es den Entlastungskegel berührt, daß der Umformerstößel (411) in einer Verlängerung des Auffüllkegels (42) geführt ist und daß sich die andere Kammer (441) mit dem Entlastungskegelsitz (424) im Inneren des Auffüllkegels (42) befindet.

## Claims

1. Arrangement comprising a fitting (2) and a control device having at least two spring-loaded control valves (4) which each actuate a dedicated control part (3, 3a, 3b), for opening the fitting (2) which is opened by pressure relief by means of a control line (81, 82, 83), **characterized in that** the control parts (3, 3a, 3b) are arranged on the control line (81, 82, 83) in such a manner that they open this fitting (2) when, and only when, all the control parts (3, 3a, 3b) are in a position in which the load on the fitting is relieved, and **in that** the control parts (3, 3a, 3b) close the fitting (2) as soon as even only one of the control parts (3, 3a, 3b) is in a position which imposes a load on the fitting.

2. Arrangement comprising a fitting (2) and a control device having at least two spring-loaded control valves (4) which each actuate a dedicated control part (3, 3a, 3b) for opening the fitting (2') which is opened by pressure relief by means of a control line (84, 82, 85), **characterized in that** the control parts are arranged on the control line (84, 82, 85) of the fitting (2') in such a manner that they open this fitting (2') when, and only when, all the control parts (3, 3a, 3b) are in a position which imposes a load on the fitting (2'), and **in that** the control parts (3, 3a, 3b) close the fitting as soon as even only one of the control parts (3, 3a, 3b) is in a position which relieves the load on the fitting (2').

3. Arrangement comprising a fitting (2) and a control device according to Claim 1 or 2, **characterized in that** the control parts contain valves which are actuated by the control valves (4) and are connected in series in the control line.

4. Arrangement comprising a fitting (2) and a control device according to one of Claims 1 to 3, **characterized in that** the fitting is a safety valve (2, 21, 22).

5. Arrangement comprising a fitting (2) and a control device according to one of Claims 1 to 4, **characterized in that** the respective control valves (4) and/or control parts (3, 3a, 3b) are of the same design.

6. Arrangement comprising a fitting (2) and a control device according to one of Claims 1 to 5, **characterized in that** at least one of the control valves (4) has a pressure-displacement converter (41), and the converter (41) can be mechanically connected to a filling cone (42) and to a relief cone (43) which can be displaced in the same direction by the converter (41);
- **in that** the filling cone (42), in a first chamber (44), is arranged so that it can be displaced by a relatively low force onto an associated filling cone seat (463), in order to block off a pressure-carrying connection line (6), which opens out into the first chamber (44), from an intermediate passage (5) in the control part (3, 3a, 3b);
- and **in that** the relief cone (43), in another chamber (441) of the filling cone (42), is arranged in such a manner that it can be lifted off its relief cone seat (424) by a greater force of the converter (41) and, when it is lifted off the relief cone seat (424), connects the intermediate passage (5) in the control part (3, 3a, 3b) and the first chamber (44) to a control valve drain (48).

7. Arrangement comprising a fitting (2) and a control device according to Claim 6, **characterized in that** the pressure-displacement converter (41), the filling cone (42) and the relief cone (43) are arranged and can be displaced on a common shaft.

8. Arrangement comprising a fitting (2) and a control device according to Claim 7, **characterized in that** the pressure-displacement converter (41) is connected to a bottom end of a converter plunger (411), the other, upper end of the converter plunger (411) being situated beneath and in the immediate vicinity of the relief cone (43) and being displaceable in such a way that it touches the relief cone, **in that** the converter plunger (411) is guided in an extension of the filling cone (42), and **in that** the other chamber (441) having the relief cone seat (424) is situated in the interior of the filling cone (42).

## Revendications

1. Dispositif constitué d'un robinet (2) et d'un dispositif de commande ayant au moins deux soupapes (4) de commande soumises à l'action d'un ressort et actionnées respectivement par une propre pièce (3, 3a, 3b) de commande pour l'ouverture du robinet (2), qui est ouvert par détente de pression au moyen d'un conduit (81, 82, 83) de commande,
**caractérisé en ce que** les pièces (3, 3a, 3b) de commande sont montées sur le conduit (81, 82, 83) de commande de telle sorte qu'elles ouvrent le robinet (2) lorsque, et seulement lorsque, toutes les pièces (3, 3a, 3b) de commande se trouvent dans une position déchargeant le robinet et **en ce que** les pièces (3, 3a, 3b) de commande ferment le robinet (2) dès que même seulement l'une des pièces (3, 3a, 3b) de commande se trouve dans une position où elle charge le robinet.

2. Dispositif constitué d'un robinet (2) et d'un dispositif de commande ayant au moins deux soupapes (4) de commande soumises à l'action d'un ressort et actionnées respectivement par une propre pièce (3, 3a, 3b) de commande pour l'ouverture du robinet (2'), qui est ouvert par détente de pression au moyen d'un conduit (84, 82, 85) de commande,
**caractérisé en ce que** les pièces de commande sont montées sur le conduit (84, 82, 85) de commande du robinet (2') de façon à ce qu'elles ouvrent ce robinet (2') lorsque, et seulement lorsque, toutes les pièces (3, 3a, 3b) de commande se trouvent dans une position dans laquelle elles chargent le robinet (2') et **en ce que** les parties (3, 3a, 3b) de commande ferment le robinet dès que même seulement l'une des pièces (3, 3a, 3b) de commande se trouve dans une position dans laquelle elle décharge le robinet (2').

3. Dispositif constitué d'un robinet (2) et d'un dispositif de commande suivant la revendication 1 ou 2,
**caractérisé en ce que** les parties de commande comprennent des soupapes qui sont actionnées par les soupapes (4) de commande et qui sont montées en série dans le conduit de commande.

4. Dispositif constitué d'un robinet (2) et d'un dispositif de commande suivant l'une des revendications 1 à 3,
**caractérisé en ce que** le robinet est une vanne (2, 21, 22) de sécurité.

5. Dispositif constitué d'un robinet (2) et d'un dispositif de commande suivant l'une des revendications 1 à 4,
**caractérisé en ce que** les vannes (4) respectives de commande et/ou les parties (3, 3a, 3b) de commande ont le même type de construction.

6. Dispositif constitué d'un robinet (2) et d'un dispositif de commande suivant l'une des revendications 1 à 5,
**caractérisé en ce qu'**au moins l'une des soupapes (4) de commande comporte un transducteur (41) pression-course et le transducteur (41) peut être relié mécaniquement à un cône (42) de remplissage et à un cône (43) de détente que le transducteur (41) peut faire coulisser dans la même direction,
- **en ce que** le cône (42) de chargement est monté coulissant dans une première chambre (44) sous l'effet d'une force assez petite l'appliquant sur un siège (463) de remplissage qui lui est associé pour fermer un conduit (6) de raccordement conduisant la pression et débouchant dans la première chambre (44) vis à vis d'un canal (5) intermédiaire de la pièce (3, 3a, 3b) de commande;
- et **en ce que** le cône (43) de détente est disposé dans une autre chambre (441) du cône (42) de remplissage en pouvant être soulevé du siège (424) de cône de détente par une force plus grande du transducteur (41) et lorsqu'il est soulevé du siège (424) du cône de détente il met le canal (5) intermédiaire de la pièce (3, 3a, 3b) de commande, qui est la première chambre (44), en communication avec un drainage (48) de soupape de commande.

7. Dispositif constitué d'un robinet (2) et d'un dispositif de commande suivant la revendication 6,
**caractérisé en ce que** le transducteur (41) pression-course, le cône (42) de remplissage et le cône (43) de détente sont montés et peuvent coulisser sur un axe commun.

8. Dispositif constitué d'un robinet (2) et d'un dispositif de commande suivant la revendication 7,
**caractérisé en ce que** le transducteur (41) pression-course est relié à une extrémité inférieure d'un poussoir (411) de convertisseur, l'autre extrémité supérieure du poussoir (411) de convertisseur se trouvant en-dessous et à proximité immédiate du cône (43) de détente et pouvant coulisser de manière à ce qu'il touche le cône de détente, **en ce que** le poussoir (411) de convertisseur est guidé dans un prolongement du cône (42) de remplissage et **en ce que** l'autre chambre (441) se trouve avec le siège (424) de cône de détente à l'intérieur du cône (42) de remplissage.
